# EUROPEAN PATENT APPLICATION

(11) **EP 2 843 422 A1**
(43) Date of publication of application: **04.03.2015**
(21) Application number: 13782067.6
(22) Date of filing: 05.04.2013
(51) Int. Cl.: G01Q 30/02, G01Q 80/00, G02B 21/00

(54) **COMPOSITE MICROSCOPE COMBINING SCANNING PROBE MICROSCOPE AND OPTICAL MICROSCOPE; CONTROL DEVICE, CONTROL METHOD, AND CONTROL PROGRAM THEREFOR; AND RECORDING MEDIUM**

(30) Priority: 25.04.2012 JP 2012099742
(71) Applicant: Olympus Corporation, Shibuya-ku Tokyo 151-0072 (JP)
(72) Inventor: YAGI, Akira, Hachioji-shi Tokyo 192-8512 (JP); SAKAI, Nobuaki, Hachioji-shi Tokyo 192-8512 (JP); UEKUSA, Yoshitsugu, Hachioji-shi Tokyo 192-8512 (JP); ITO, Shuichi, Hachioji-shi Tokyo 192-8512 (JP)
(74) Representative: Winter, Brandl, Fürniss, Hübner, Röss, Kaiser, Polte - Partnerschaft mbB
(86) International application number: PCT/JP2013/060518
(87) International publication number: WO 2013/161545

(57) **Abstract**

A compound microscope (10) comprises an optical microscope (11) to acquire dynamic optical microscope observation data of a sample (S), a scanning probe microscope (12) to acquire dynamic SPM observation data of the sample (S), and a control device to simultaneously give a common control command to the optical microscope (11) and the scanning probe microscope (12).

## Description

### Technical Field

The present invention relates to a compound microscope with an optical microscope and a scanning probe microscope combined.

### Background Art

An optical microscope is used to magnify and image an observation target or to recognize the optical characteristics of the observation target.

Various observation methods are available depending on the optical characteristics to be obtained; fluorescence observation, differential interference observation, phase contrast observation, total reflection fluorescence observation, and confocal observation.

On the other hand, a scanning probe microscope is used to recognize the physical properties of a sample by approaching a pointed probe to the surface of the sample, and detecting three-dimensional roughness on the surface of the sample or the physical properties of the sample using information derived from interaction between the probe and the sample surface to image them.

In research and development in the field of nanotechnology, particularly in bio-related fields, it is desired to recognize changes of a substance with time with a high resolution microscope.

Accordingly, various forms of devices with an optical microscope and a scanning probe microscope combined have been suggested.

However, the optical microscope has heretofore only functioned to find a measurement position by the scanning probe microscope and position a probe position of the scanning probe microscope to a sample position to be measured.

Meanwhile, Jpn. Pat. Appln. KOKAI Publication No. 2007-322396 has suggested a compound microscope in which a transmission electron microscope different from the optical microscope, and a scanning near field optical microscope (SNOM), which is a kind of scanning probe microscope, are combined.

In this compound microscope, a synchronization signal generating device is connected to a computer for control and image display, and the synchronization signal generating device controls it synchronously with scanning means so that light intensity or spectral data and a captured signal of near-field light or normal propagating light are adapted as data for the near field optical microscope.

In this way, times based on the synchronization signal generating device are recorded in transmission electron microscope that are recorded in a video tape recorder by the computer, and times based on the synchronization signal generating device are allocated to data points obtained by the SNOM, so that the transmission electron microscope images at the respective data points can be checked.

Since the images by the transmission electron microscope are saved in the VTR by photographing luminescent spots on a fluorescent screen with a camera, the images are recorded in a shorter time than the time required for the SNOM to collect data. Thus, it is possible to allocate the images by the transmission electron microscope to all the data points collected by the SNOM.

Since the scanning.probe microscope acquires, as one image, information based on interaction between a sample and a probe by scanning the sample while controlling the height of the probe generally in accordance with the interaction between the probe and the sample within a measurement range, it takes a time of several ten seconds to several ten minutes to acquire one image. On the other hand, other microscopes such as the transmission electron microscope and the optical microscope generally require an image acquisition time of about several ten milliseconds per image. When these data are simultaneously saved, since an image by the optical microscope always corresponds to an image by the scanning probe microscope, images can be collated simply by synchronizing the images and comparing the times.

However, recent development of the scanning probe microscope has allowed a time of 25 milliseconds to 1000 milliseconds to acquire one image in, for example, an atomic force microscope.

To observe the change of a sample in a fluorescence microscope image, which is often used in bioresearch and others as an example of the optical microscope, it is necessary to set the loading time of a fluorescent image, that is, an exposure time in accordance with a phenomenon to be observed. For example, the exposure time for one image may be one or more seconds. If the time for data transfer and others is also included, the acquisition time for one image may be one or more seconds.

In order to observe the change of the sample in the scanning probe microscope, a scanning rate is determined by a rate sufficiently higher than the change of the sample and by the time for the control to follow the adsorption of a measurement target to a substrate. For example, a scanning time for tracking the change of a biological sample is approximately 25 milliseconds to 1000 milliseconds. If a return time of the scanning and the time for data transfer are taken into consideration, the acquisition time is equal to or more than the scanning time. For example, the acquisition time for tracking the change of a biological sample is approximately 25 milliseconds to 1000 milliseconds or more.

The state of each observation data can be the best state if the optical microscope is combined with the scanning probe microscope to observe the same observation target using acquisition times optimal for respective microscopes.

### Citation List

### Patent Literature

Patent Literature 1: Jpn. Pat. Appln. KOKAI Publication No. 2007-322396

### Summary of Invention

### Technical Problem

However, the conventional compound microscope acquires each observation image by the microscope (the transmission electron microscope in the conventional example described above) synchronously with each observation image by the scanning probe microscope (the scanning near field optical microscope in the conventional example described above) combined with the former. Thus, when the acquisition times of the observation images by the two combined microscopes are different, one of the microscopes (with the shorter acquisition time) has to stop image acquisition until the other microscope (with the longer acquisition time) finishes image acquisition.

For example, if the acquisition time for one observation image in the scanning probe microscope is one second and the acquisition time for one observation image in the optical microscope is 1.2 seconds, a wait time of 0.2 seconds has to be given to the scanning probe microscope every image acquisition until the acquisition of the observation image in the optical microscope is finished.

When there is such a wait time, a phenomenon to be observed may be unsuccessfully recorded.

The present invention has been made in view of the circumstances, and an object of the invention is to provide a compound microscope, a control device of the same, a control method, and a control program capable of saving observation data by an optical microscope and a scanning probe microscope while preserving simultaneity without missing a phenomenon.

### Solution to Problem

A compound microscope according to the invention comprises an optical microscope to acquire dynamic observation data comprising a series of time-series successive optical observation images of an observation target, a scanning probe microscope to acquire dynamic observation data comprising a series of time-series successive probe-derived observation images of the observation target, and a control device to simultaneously give a common control command to the optical microscope and the scanning probe microscope.

### Advantageous Effects of Invention

The present invention provides a compound microscope, a control device of the same, a control method, and a control program capable of saving observation data by an optical microscope and a scanning probe microscope while preserving simultaneity without missing a phenomenon.

### Brief Description of Drawings

FIG. 1 shows a compound microscope according to a first embodiment;
FIG. 2 shows a control device shown in FIG. 1;
FIG. 3 shows optical microscope observation data and AFM observation data that have been simultaneously started to be saved;
FIG. 4 shows an optical microscope observation image and an AFM observation image that are provided with start-to-save information;
FIG. 5 shows the optical microscope observation data and the AFM observation data that have been simultaneously ended to be saved;
FIG. 6 shows an optical microscope observation image and an AFM observation image that are provided with end-to-save information;
FIG. 7 shows the optical microscope observation data and the AFM observation data into which event information has been simultaneously written;
FIG. 8 shows an optical microscope observation image and an AFM observation image that are provided with information on event information simultaneous writing;
FIG. 9 schematically shows a compound microscope according to a second embodiment;
FIG. 10 shows an optical microscope observation image, an AFM observation image, and input switches that are displayed on a common monitor for AFM and optical microscope shown in FIG. 9;
FIG. 11 schematically shows a compound microscope according to a third embodiment;
FIG. 12 shows optical microscope observation data and AFM observation data into which solution addition event information has been simultaneously written, and a control device applied to solution addition;
FIG. 13 shows optical microscope observation data and AFM observation data into which the solution addition event information has been simultaneously written and a graph of salt concentration;
FIG. 14 schematically shows a compound microscope according to a fourth embodiment;
FIG. 15 shows optical microscope observation data and AFM observation data into which light stimulation event information has been simultaneously written, and a control device applied to light stimulation;
FIG. 16 shows optical microscope observation data and AFM observation data into which the light stimulation event information has been simultaneously written and a graph of the light stimulation;
FIG. 17 shows the optical microscope observation data and the AFM observation data that are reproduced with start-to-save timings synchronized;
FIG. 18 shows the optical microscope observation data and the AFM observation data that are reproduced with end-to-save timings synchronized;
FIG. 19 shows the optical microscope observation data and the AFM observation data that are reproduced with event information providing timings synchronized;
FIG. 20 shows an optical microscope observation image and an AFM observation image to be reproduced; and
FIG. 21 shows a composite observation image in which the optical microscope observation image and the AFM observation image are composed.

### Description of Embodiment

Hereinafter, embodiments will be described with reference to the drawings.

### [First Embodiment]

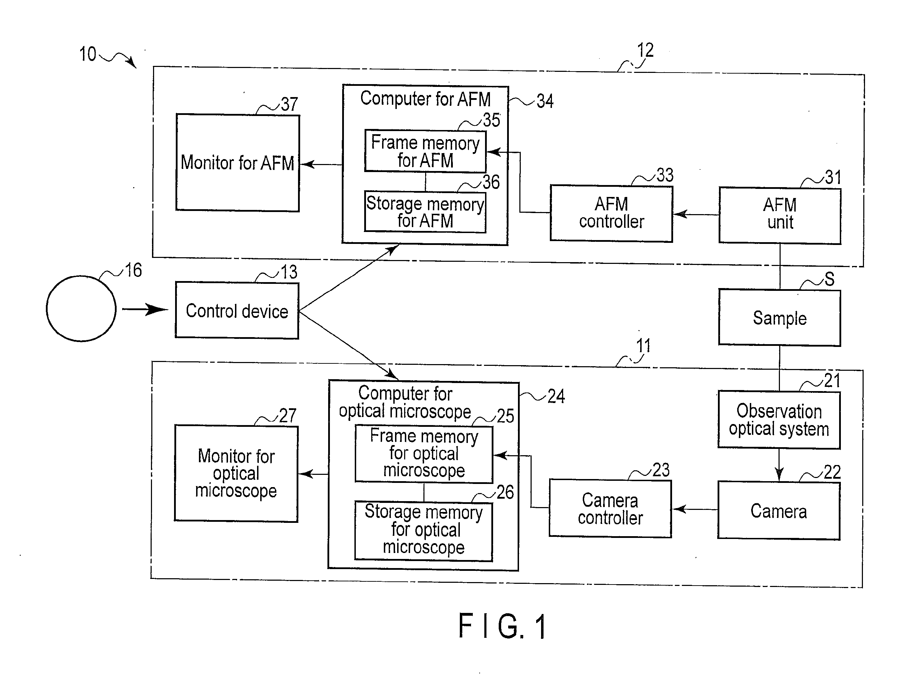

As shown in FIG. 1, a compound microscope 10 according to the first embodiment comprises an optical microscope 11 to acquire dynamic optical microscope observation data of a sample S, which is an observation target, a scanning probe microscope 12 to acquire dynamic SPM observation data of the sample S, and a control device 13 to simultaneously give a common control command to the optical microscope 11 and the scanning probe microscope 12.

Here, the dynamic optical microscope observation data to be acquired by the optical microscope 11 comprises a series of time-series successive optical microscope observation images (optical microscope observation images) of the sample S. The dynamic SPM observation data to be acquired by the scanning probe microscope 12 comprises a series of time-series successive probe-derived observation images (SPM observation images) of the sample S. In other words, the dynamic optical microscope observation data means a series of time-series optical microscope observation images acquired without unnecessary time intervals, and the dynamic SPM observation data means a series of time-series SPM observation images acquired without unnecessary time intervals. In the following explanation, the dynamic optical microscope observation data may be briefly referred to as optical microscope observation data, and the dynamic SPM observation data may be briefly referred to as SPM observation data.

### [Optical Microscope]

The optical microscope 11 comprises an observation optical system 21, a camera 22, a camera controller 23, a computer 24 for optical microscope, and a monitor 27 for optical microscope.

The observation optical system 21 is configured to form a magnified optical image of the sample S or the distribution of its optical characteristics.

The camera 22 has a function of electronizing the optical image formed by the observation optical system 21.

The camera controller 23 is configured to construct an optical microscope observation image on the basis of the optical image electronized by the camera 22, and sequentially supply the optical microscope observation image to the computer 24 for optical microscope.

The monitor 27 for optical microscope is configured to display the optical microscope observation data and others.

The computer 24 for optical microscope is configured to control each component of the optical microscope 11, and also control the display and saving of the optical microscope observation data.

The computer 24 for optical microscope comprises a frame memory 25 for optical microscope to temporarily retain one of the optical microscope observation images sequentially supplied from the camera controller 23, and a storage memory 26 for optical microscope to save a series of time-series successive optical microscope observation images, that is, the dynamic optical microscope observation data sequentially supplied from the camera controller 23.

The computer 24 for optical microscope can cause the monitor 27 for optical microscope to display the optical microscope observation images of the sample S in real time by sequentially sending the optical microscope observation images temporarily retained in the frame memory 25 for optical microscope to the monitor 27 for optical microscope. The optical microscope observation images displayed in real time are a series of time-series successive optical microscope observation images, which are also the dynamic optical microscope observation data. The computer 24 for optical microscope can also output the optical microscope observation data saved in the storage memory 26 for optical microscope to the monitor 27 for optical microscope, so as to cause the monitor 27 for optical microscope to display the optical microscope observation data.

The optical microscope 11 is configured to save measurement parameters in relation to the dynamic optical microscope observation data. Thus, when saving the optical microscope observation data, the computer 24 for optical microscope can also save the measurement parameters used for the control of the camera controller 23 in the storage memory 26 for optical microscope compatibly with the optical microscope observation data. Here, the measurement parameters are information necessary for the reproduction of the optical microscope observation data, and are, for example, information regarding a measurement range and exposure time. Consequently, information management is easier during the reproduction of the saved optical microscope observation data.

### [Scanning Probe Microscope]

Here, the scanning probe microscope 12 comprises an atomic force microscope (AFM), which is a most typical example of the scanning probe microscope. Therefore, here, the SPM observation image and the SPM observation data mentioned above are AFM observation image and the AFM observation data, respectively.

The scanning probe microscope 12 includes an AFM unit 31, an AFM controller 33, a computer 34 for AFM, and a monitor 37 for AFM.

The AFM unit 31 comprises, for example, a cantilever having a mechanical probe at the end, a displacement sensor to detect the displacement or vibration state of the cantilever, and a scan mechanism to control the relative positions of the cantilever and the sample S.

The AFM controller 33 is configured to supply a z-control signal to maintain constant output of the displacement sensor to the scan mechanism, while supplying an xy-scan signal to the scan mechanism to move the cantilever along the surface of the sample S, and process the z-control signal synchronously with the xy-scan signal, so as to construct an AFM observation image, and then sequentially supply the AFM observation image to the computer 24 for optical microscope. The z-control signal is, for example, height information regarding the surface of the sample S, in which case the z-control signal represents the surface configuration of the sample S. However, the z-control signal is not limited to this. The z-control signal may be some other information resulting from the interaction between the probe and the sample, such as a phase or a potential.

The monitor 37 for AFM is configured to display the AFM observation'data and others.

The computer 34 for AFM is configured to control each component of the scanning probe microscope 12, and also control the display and saving of the AFM observation data.

The computer 34 for AFM comprises a frame memory 35 for AFM to temporarily retain one of AFM observation images sequentially supplied from the AFM controller 33, and a storage memory 36 for AFM to save a series of time-series successive AFM observation images, that is, the dynamic AFM observation data sequentially supplied from the AFM controller 33.

The computer 34 for AFM can cause the monitor 37 for AFM to display the AFM observation images of the sample S in real time by sequentially sending the AFM observation images temporarily retained in the frame memory 35 for AFM to the monitor 37 for AFM. The AFM observation images displayed in real time are a series of time-series successive AFM images, which are also the dynamic AFM observation data. The computer 34 for AFM can also output the AFM observation data saved in the storage memory 36 for AFM to the monitor 37 for AFM, so as to cause the monitor 37 for AFM to display the AFM observation data.

The scanning probe microscope 12 is configured to save measurement parameters in relation to the dynamic AFM observation data. Thus, when saving the AFM observation data, the computer 34 for AFM can also save the measurement parameters used for the control of the AFM controller 33 in the storage memory 36 for AFM compatibly with the AFM observation data. Here, the measurement parameters are information necessary for the reproduction of the AFM observation data, and are, for example, information regarding a scan range and a scan time. Consequently, information management is easier during the reproduction of the saved AFM observation data.

### [Control Device]

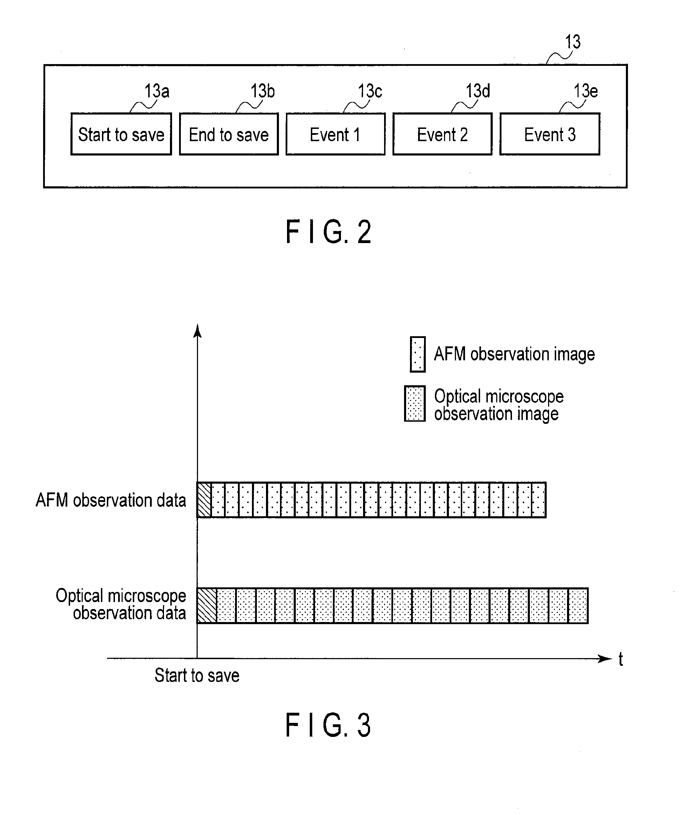

As shown in FIG. 2, the control device 13 includes switches 13a, 13b, 13c, 13d, and 13e. Here, the switch 13a to which the name "start to save" is allocated is a start-to-save switch to simultaneously give commands to start to save the observation data to the optical microscope 11 and the scanning probe microscope 12, respectively. The switch 13b to which the name "end to save" is allocated is an end-to-save switch to simultaneously give commands to end to save the observation data to the optical microscope 11 and the scanning probe microscope 12, respectively. Each of the switches 13c, 13d, and 13e to which the names "Event 1", "Event 2", and "Event 3" are allocated is an event information providing switch to simultaneously give commands to provide event information to the observation data to the optical microscope 11 and the scanning probe microscope 12.

These switches 13a, 13b, 13c, 13d, and 13e may comprise any mechanical switches such as a toggle, a button, a slide, a membrane, and a liquid crystal touch panel button.

### [Start of Saving]

The control device 13 gives commands to start to save the observation data to the computer 24 for optical microscope and the computer 34 for AFM in response to an "on" operation of the switch 13a. On receipt of the commands, the computer 24 for optical microscope starts to cause the optical microscope observation images sequentially supplied to the frame memory 25 for optical microscope to be transferred to and saved in the storage memory 26 for optical microscope, and the computer 34 for AFM starts to cause the AFM observation images sequentially stored in the frame memory 35 for AFM to be transferred to and saved in the storage memory 36 for AFM.

Accordingly, as shown in FIG. 3, a series of time-series successive optical microscope observation images, that is, the dynamic optical microscope observation data are saved in the storage memory 26 for optical microscope, and a series of time-series successive SPM images, that is, the SPM observation data are saved in the storage memory 36 for AFM. In FIG. 3, the optical microscope observation image and the AFM observation image that are shaded represent the optical microscope observation image and the AFM observation image at the start of saving, respectively.

At the same time, the computer 24 for optical microscope provides information indicating a start-to-save image to the initial optical microscope observation image of the optical microscope observation data, and the computer 34 for AFM provides information indicating a start-to-save image to the initial AFM observation image of the AFM observation data.

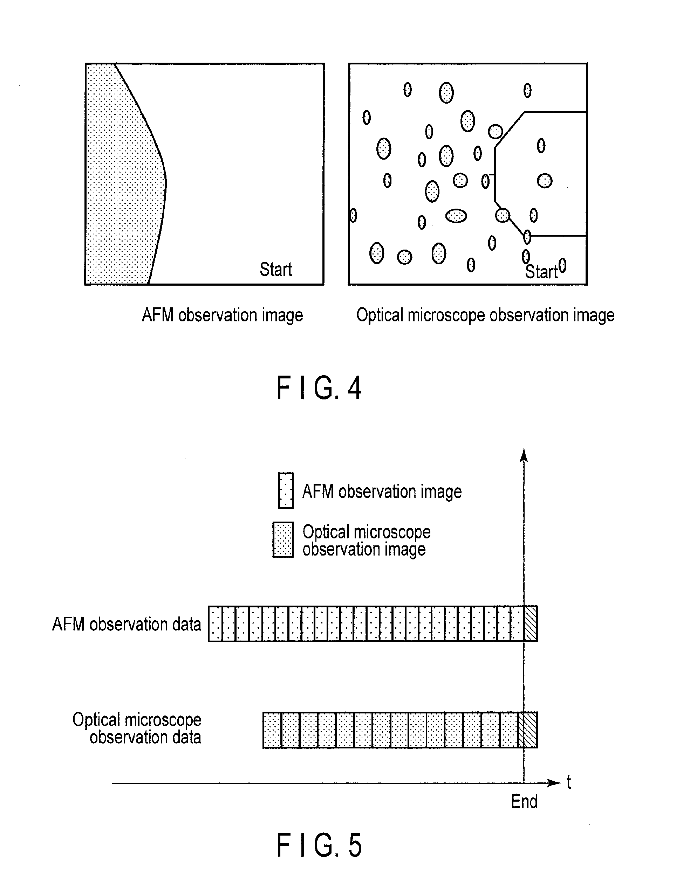

As shown in FIG. 4, this information may be provided by adding a common mark such as a word "start" to the respective ones or may be added to information regarding the measurement parameters.

The above information to each of the initial observation images of the optical microscope observation data and the AFM observation data, so that the start-to-save timing is preserved between the optical microscope observation data and the AFM observation data.

### [End of Saving]

During the saving of the optical microscope observation data and the AFM observation data, in response to an "on" operation of the end-to-save switch 13b, the control device 13 gives commands to end to save the observation data to the computer 24 for optical microscope and the computer 34 for AFM. On receipt of the commands, the computer 24 for optical microscope ends to cause the optical microscope observation images sequentially supplied to the frame memory 25 for optical microscope to be transferred to and saved in the storage memory 26 for optical microscope, and the computer 34 for AFM ends to cause the AFM observation images sequentially stored in the frame memory 35 for AFM to be transferred to and saved in the storage memory 36 for AFM.

Accordingly, as shown in FIG. 5, the saving of a series of time-series successive optical microscope observation images, that is, the dynamic optical microscope observation data in the storage memory 26 for optical microscope is ended, and the saving of a series of time-series successive SPM images, that is, the SPM observation data in the storage memory 36 for AFM is ended. In FIG. 5, the optical microscope observation image and the AFM observation image that are shaded represent the optical microscope observation image and the AFM observation image at the end of saving, respectively.

At this time, the computer 24 for optical microscope provides information indicating an end-to-save image to the last optical microscope observation image of the optical microscope observation data saved in the storage memory 26 for optical microscope, and the computer 34 for AFM provides information indicating an end-to-save image to the last AFM observation image of the AFM observation data saved in the storage memory 36 for AFM.

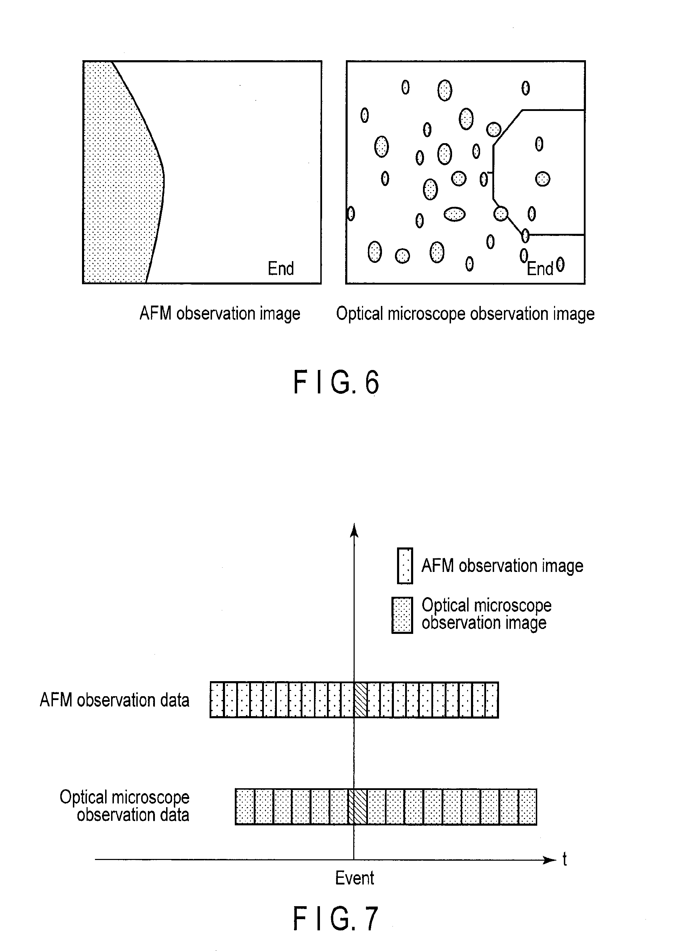

As shown in FIG. 6, this information may be provided by adding a common mark such as a word "end" to the respective ones or may be added to information regarding the measurement parameters.

The above information to each of the last observation images of the optical microscope observation data and the AFM observation data, so that the end-to-save timing is preserved between the optical microscope observation data and the AFM observation data.

Here, the saving of the optical microscope observation data and the AFM observation data may be started by the "on" operation of the start-to-save switch 13a.

### [Event Information Provision]

During the saving of the optical microscope observation data and the AFM observation data, for example, in response to an "on" operation of the event information providing switch 13c, the control device 13 gives commands to provide event information to the computer 24 for optical microscope and the computer 34 for AFM. On receipt of the commands, the computer 24 for optical microscope provides event information to the optical microscope observation image that is being transferred to and saved in the storage memory 26 for optical microscope at the same time, and the computer 34 for AFM provides event information to the AFM observation image that is being transferred to and saved in the storage memory 36 for AFM at the same time.

Accordingly, as shown in FIG. 7, the event information is provided to the middle optical microscope observation image of the optical microscope observation data (a series of time-series successive optical microscope observation images) to be saved in the storage memory 26 for optical microscope and to the middle optical microscope observation image of the SPM observation data (a series of time-series successive SPM images) to be saved in the storage memory 36 for AFM. In FIG. 7, the optical microscope observation image and the AFM observation image that are shaded represent the optical microscope observation image and the AFM observation image to which the event information has been provided, respectively.

Here, the event information is information regarding the dynamic change of the sample, and this event information may be provided not only to one observation image but also to any necessary observation images, or may be recognizable by being left on record in the measurement parameters.

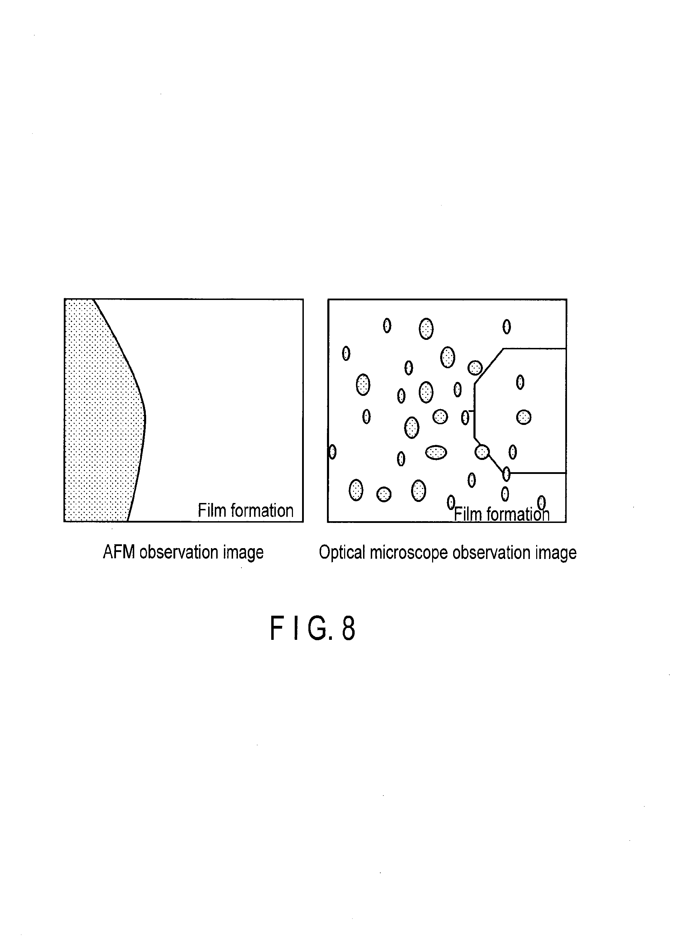

As shown in FIG. 8, the event information may be provided by adding a name of an event indicating an expected change of the sample S such as words "film formation" to the respective ones or may be added to information regarding the measurement parameters.

The event information to each of the middle observation images of the optical microscope observation data and the AFM observation data, so that the event timing is preserved between the optical microscope observation data and the AFM observation data.

Here, the saving of the optical microscope observation data and the AFM observation data may be started and ended by the "on" operations of the start-to-save switch 13a and the end-to-save switch 13b, respectively.

### [Configuration Example of Control Device]

The control device 13 may comprise a general-purpose computer such as a personal computer. In this case, the switches 13a, 13b, 13c, 13d, and 13e comprise graphic interfaces, and the function of simultaneously giving common control commands such as the above-mentioned start of saving, end of saving, and event information provision is obtained by software. The personal computer that constitutes the control device 13 obtains the function of simultaneously giving common control commands such as the start to save, end to save, and event information provision to the computer 24 for optical microscope and the computer 34 for AFM by loading, from a storage medium 16 into a memory, a control program that is stored in the storage medium 16 and that enables the computer to perform the function of simultaneously giving common control commands such as the start to save, end to save, and event information provision to the computer 24 for optical microscope and the computer 34 for

### AFM.

### [Second Embodiment]

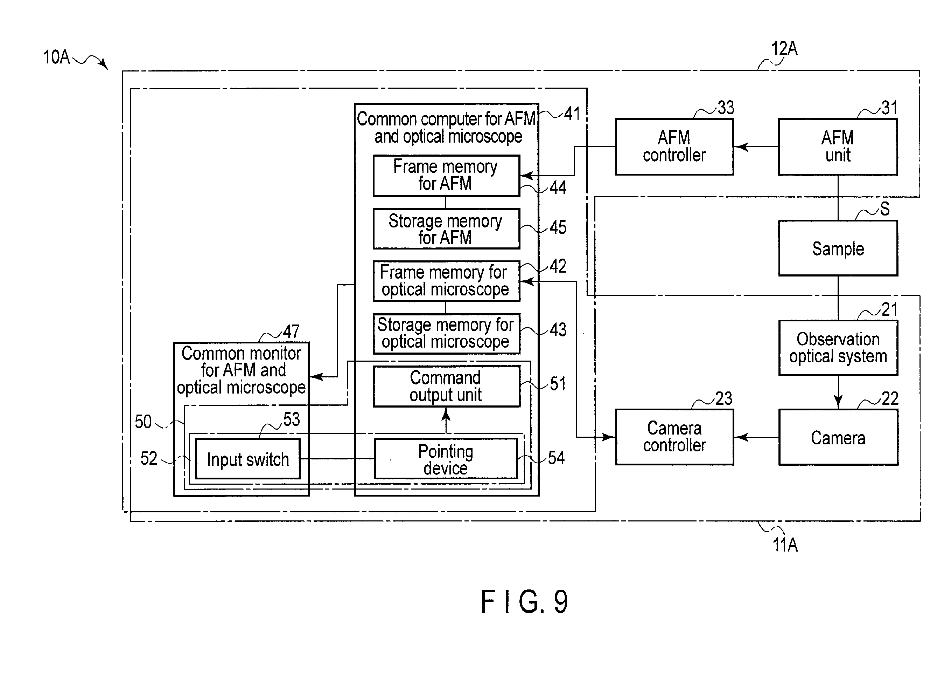

A compound microscope according to the second embodiment is shown in FIG. 9. Components in FIG. 9 having the same reference signs as those of the components shown in FIG. 1 are similar components, and are not described in detail. The differences are mainly described below. That is, parts that are not described below are similar to the parts according to the first embodiment.

As shown in FIG. 9, a compound microscope 10A according to the second embodiment comprises an optical microscope 11A to acquire dynamic optical microscope observation data of a sample S, and a scanning probe microscope 12A to acquire dynamic SPM observation data of the sample S.

### [Optical Microscope and Scanning Probe Microscope]

The optical microscope 11A comprises an observation optical system 21, a camera 22, a camera controller 23, a common computer 41 for AFM and optical microscope, and a common monitor 47 for AFM and optical microscope. The scanning probe microscope 12A comprises an AFM unit 31, an AFM controller 33, the common computer 41 for AFM and optical microscope, and the common monitor 47 for AFM and optical microscope. That is, the optical microscope 11A and the scanning probe microscope 12A both includes the common computer 41 for AFM and optical microscope and the common monitor 47 for AFM and optical microscope.

The common computer 41 for AFM and optical microscope comprises a frame memory 42 for optical microscope to temporarily retain one optical microscope observation image, a storage memory 43 for optical microscope to save dynamic optical microscope observation data, a frame memory 44 for AFM to temporarily retain one AFM observation image, and a storage memory 45 for AFM to save dynamic AFM observation data. The functions of the frame memory 42 for optical microscope, the storage memory 43 for optical microscope, the frame memory 44 for AFM, and the storage memory 45 for AFM are similar to the functions of the frame memory 25 for optical microscope, the storage memory 26 for optical microscope, the frame memory 35 for AFM, and the storage memory 36 for AFM according to the first embodiment, respectively.

The common computer 41 for AFM and optical microscope can cause the common monitor 47 for AFM and optical microscope to display the optical microscope observation images and the AFM observation images of the sample S in real time by sequentially sending, to the common monitor 47 for AFM and optical microscope, the optical microscope observation images temporarily retained in the frame memory 42 for optical microscope and the AFM observation images temporarily retained in the frame memory 44 for AFM.

The common computer 41 for AFM and optical microscope can also output the optical microscope observation data saved in the storage memory 43 for optical microscope and the AFM observation data saved in the storage memory 45 for AFM to the common monitor 47 for AFM and optical microscope, so as to cause the common monitor 47 for AFM and optical microscope to display the optical microscope observation data and the AFM observation data.

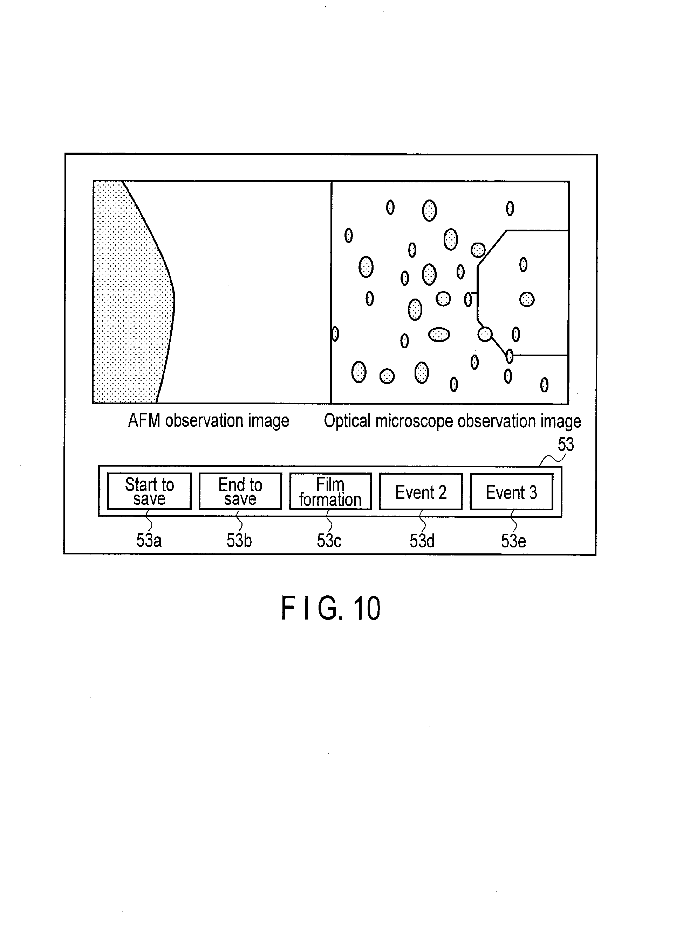

The optical microscope observation data and the AFM observation data, including the optical microscope observation images and the AFM observation images to be displayed in real time, are displayed on the common monitor 47 for AFM and optical microscope side by side as shown in FIG. 10.

### [Control Device]

The compound microscope 10A also comprises a control device 50 to simultaneously give a common control command to the optical microscope 11A and the scanning probe microscope 12A. The function of the control device 50 is similar to that of the control device 13 according to the first embodiment.

The control device 50 includes a switch 52, which comprises a graphic interface, and a command output unit 51 to output a control command in accordance with the operation of the switch 52. The switch 52 comprises an input switch 53, which comprises a computer graphics displayed on the common monitor 47 for AFM and optical microscope, and a pointing device 54 such as a mouse to operate the input switch 53. The command output unit 51 and the pointing device 54 comprise part of the common computer 41 for AFM and optical microscope.

As shown in FIG. 10, the input switch 53 includes switches 53a, 53b, 53c, 53d, and 53e. The switch 53a to which the name "start to save" is allocated is a start-to-save switch to simultaneously give commands to start to save the observation data to the optical microscope 11A and the scanning probe microscope 12A, respectively. The switch 53b to which the name "end to save" is allocated is an end-to-save switch to simultaneously give commands to end to save the observation data to the optical microscope 11A and the scanning probe microscope 12A, respectively. The switch 53c to which the name "film formation" is allocated is an event information providing switch to simultaneously give commands to provide film formation event information to the observation data to the optical microscope 11A and the scanning probe microscope 12A, respectively. The switches 53d and 53e to which the names "Event 2" and "Event 3" are allocated are event information providing switches to simultaneously give commands to provide event information to the observation data to the optical microscope 11A and the scanning probe microscope 12A, respectively.

### [Start of Saving and End of Saving]

The control device 50 outputs, inside the common computer 41 for AFM and optical microscope, a command to start to save the observation data in response to an "on" operation of the start-to-save switch 53a. Accordingly, for example, as in the first embodiment, the common computer 41 for AFM and optical microscope starts to save the optical microscope observation data and the AFM observation data respectively in the storage memory 43 for optical microscope and the storage memory 45 for AFM, and provides information indicating start-to-save images to the initial images.

During the saving of the optical microscope observation data and the AFM observation data, in response to an "on" operation of the end-to-save switch 53b, the control device 50 outputs a command to end to save the observation data, and the common computer 41 for AFM and optical microscope, for example, as in the first embodiment, ends to save the optical microscope observation data and the AFM observation data in the storage memory 43 for optical microscope and the storage memory 45 for AFM, and provides information indicating end-to-save images to the last images.

However, in this embodiment, the optical microscope 11A and the scanning probe microscope 12A both include the common computer 41 for AFM and optical microscope and the common monitor 47 for AFM and optical microscope, so that the observation data may be processed as below instead of being processed in the way described above.

In response to the command to start to save the observation data, the common computer 41 for AFM and optical microscope saves, as one compound observation data, the optical microscope observation data and the AFM observation data that are displayed on the common monitor 47 for AFM and optical microscope side by side for real time.

In response to the command to end to save the observation data, the common computer 41 for AFM and optical microscope ends to save the compound observation data and provides information indicating an end-to-save image to the last image of the compound observation data.

As a result, the start-to-save and end-to-save timings are preserved between the optical microscope observation data and the AFM observation data.

That is, in this compound microscope 10A, the optical microscope 11A and the scanning probe microscope 12A are configured to merge the observation data respectively displayed thereby to save it as a compound observation data.

When saving the compound observation data, the common computer 41 for AFM and optical microscope may save the measurement parameters used for the control of the camera controller 23 and the AFM controller 33 compatibly with the compound observation data. That is, the optical microscope 11A and the scanning probe microscope 12A are configured to save the measurement parameters in relation to the compound observation data.

### [Event Information Provision]

During the saving of the optical microscope observation data and the AFM observation data, in response to an "on" operation of the film formation switch 53c, the control device 50 outputs, inside the common computer 41 for AFM and optical microscope, a command to provide film formation information. Accordingly, when the optical microscope observation data and the AFM observation data are separately saved, the common computer 41 for AFM and optical microscope provides film formation event information to the optical microscope observation image and the AFM observation image being respectively saved in the storage memory 43 for optical microscope and the storage memory 45 for AFM, as in the first embodiment. If the optical microscope observation data and the AFM observation data are saved as one compound observation data, the common computer 41 for AFM and optical microscope provides film formation event information to the compound observation data being saved at this moment.

As a result, the film formation event timing is preserved between the optical microscope observation data and the AFM observation data.

### [Third Embodiment]

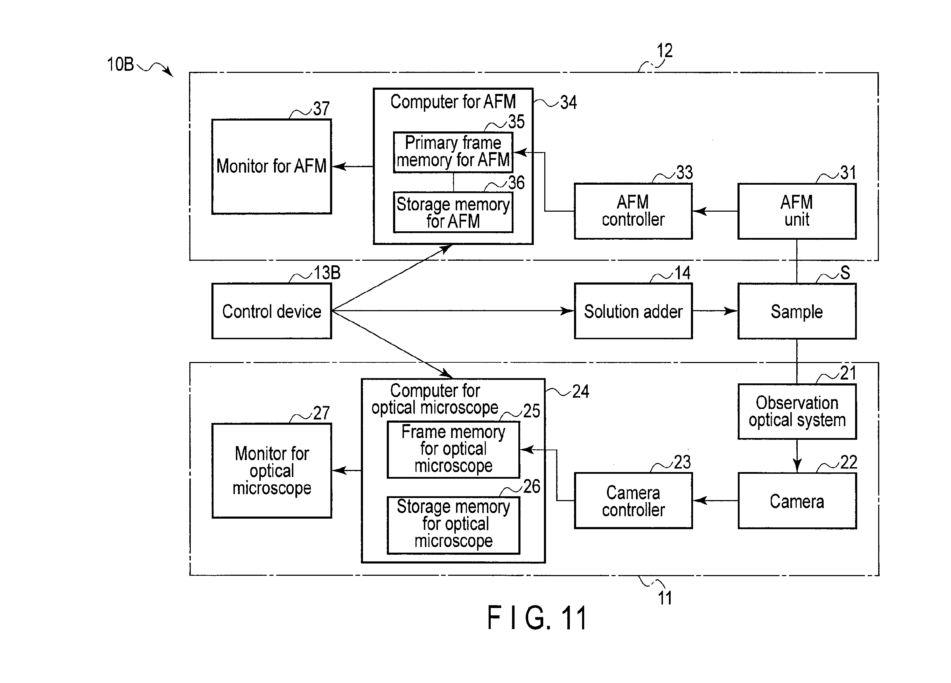

A compound microscope according to the third embodiment is shown in FIG. 11. Components in FIG. 11 having the same reference signs as those of the components shown in FIG. 1 are similar components, and are not described in detail. The differences are mainly described below. That is, parts that are not described below are similar to the parts according to the first embodiment.

As shown in FIG. 11, a compound microscope 10B according to the third embodiment comprises an optical microscope 11 to acquire dynamic optical microscope observation data of a sample S, a scanning probe microscope 12 to acquire dynamic SPM observation data of the sample S, a control device 13B, and a solution adder 14. That is, in configuration of the compound microscope 10B, the control device 13 is replaced with the control device 13B, and the solution adder 14 is added, as compared to the compound microscope 10 according to the first embodiment.

The solution adder 14 is a kind of action mechanism to give an action to the sample S, and is configured to add an additional solution to a sample solution in which the sample S exists to change the environment of the sample S. The solution to be added is, for example, a solution different in ion concentration, a solution different in pH, or a solution containing lipid or an enzyme.

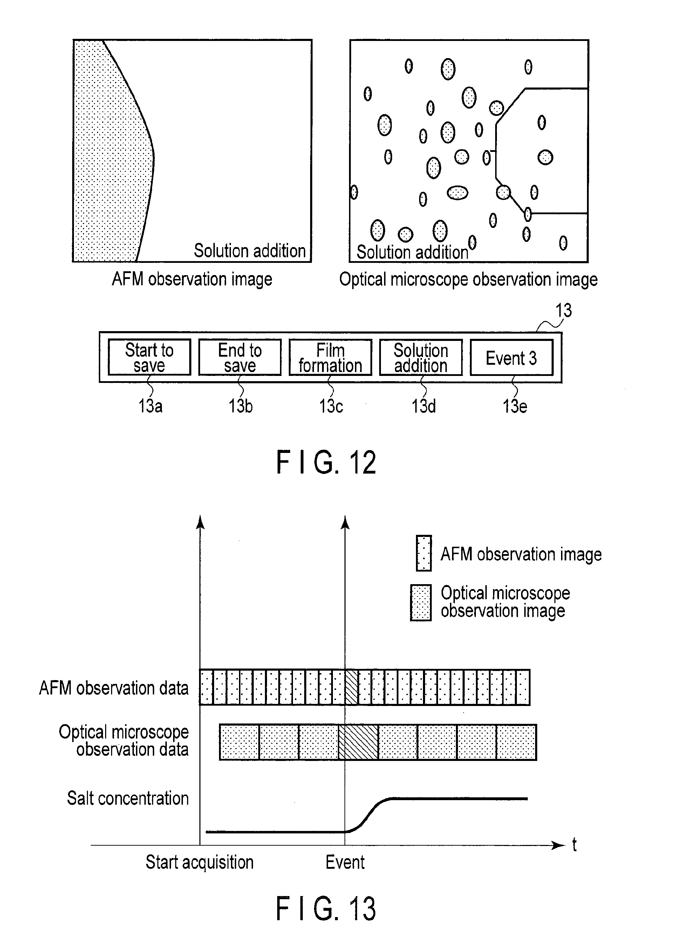

The configuration of the control device 13B is substantially similar to that of the control device 13 according to the first embodiment. However, as shown in FIG. 12, words "solution addition" are allocated to the switch 13d. The switch 13d is a switch to actuate the solution adder 14.

### [Provision of Solution Addition Information]

During the saving of the optical microscope observation data and the AFM observation data, in response to an "on" operation of the solution addition switch 13d, the control device 13B gives a solution addition command to the solution adder 14, and also gives a command to provide a solution addition event information to the computer 24 for optical microscope and the computer 34 for AFM. On receipt of the commands, the solution adder 14 adds a solution to the sample S, the computer 24 for optical microscope provides solution addition event information to the optical microscope observation image that is being saved in the storage memory 26 for optical microscope at the same time, and the computer 34 for AFM provides solution addition event information to the AFM observation image that is being saved in the storage memory 36 for AFM at the same time.

Accordingly, as shown in FIG. 13, the solution addition event information is provided to the middle optical microscope observation image of the optical microscope observation data and to the middle optical microscope observation image of the SPM observation data. In FIG. 13, the optical microscope observation image and the AFM observation image that are shaded represent the optical microscope observation image and the AFM observation image to which the solution addition event information has been provided, respectively.

As shown in FIG. 12, the solution addition event information may be provided by adding the words "solution addition" to the optical microscope observation image and the AFM observation image at the time of solution addition or by adding information to the measurement parameters. The solution addition event information may also be provided by adding the words "solution addition" to all the optical microscope observation images and all the AFM observation images after the solution addition.

Moreover, the compound microscope 10B may record the change of the environment of the sample S resulting from the solution addition, for example, the change of the salt concentration in the sample solution in relation to the optical microscope observation data and the AFM observation data. FIG. 13 shows a graph for the change of the salt concentration together with the optical microscope observation data and the AFM observation data.

Here, the saving of the optical microscope observation data and the AFM observation data may be started and ended by the "on" operations of the start-to-save switch 13a and the end-to-save switch 13b, respectively.

### [Fourth Embodiment]

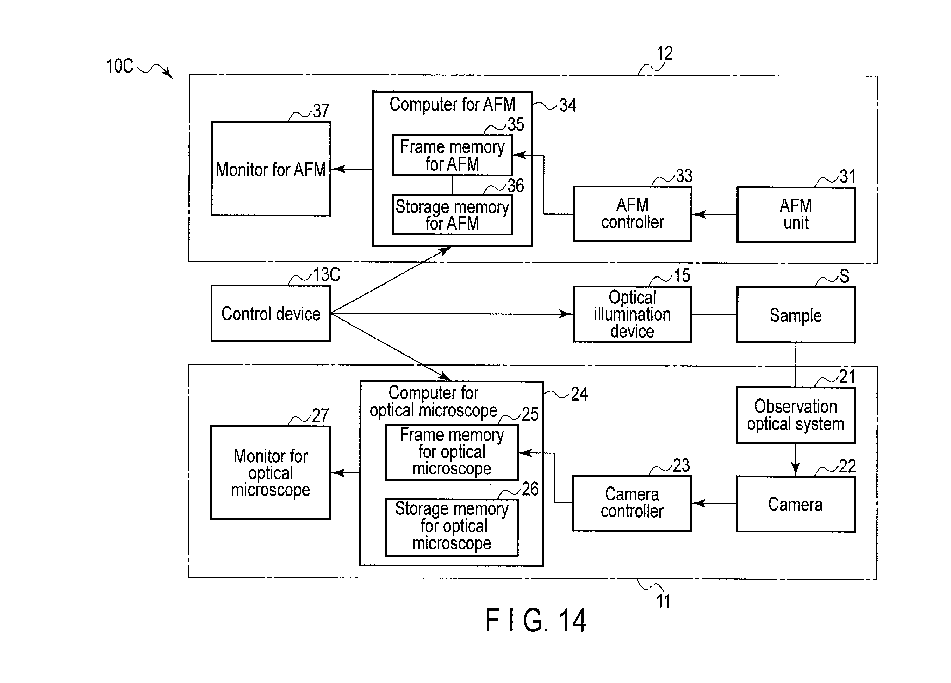

A compound microscope according to the second embodiment is shown in FIG. 14. Components in FIG. 14 having the same reference signs as those of the components shown in FIG. 1 are similar components, and are not described in detail. The differences are mainly described below. That is, parts that are not described below are similar to the parts according to the first embodiment.

As shown in FIG. 14, a compound microscope 10C according to the fourth embodiment comprises an optical microscope 11 to acquire dynamic optical microscope observation data of a sample S, a scanning probe microscope 12 to acquire dynamic SPM observation data of the sample S, a control device 13C, and an optical illumination device 15. That is, in configuration of the compound microscope 10C, the control device 13 is replaced with the control device 13C, and the optical illumination device 15 is added, as compared to the compound microscope 10 according to the first embodiment.

The optical illumination device 15 is a kind of action mechanism to give an action to the sample S, and is configured to apply light to the sample S to stimulate the sample S.

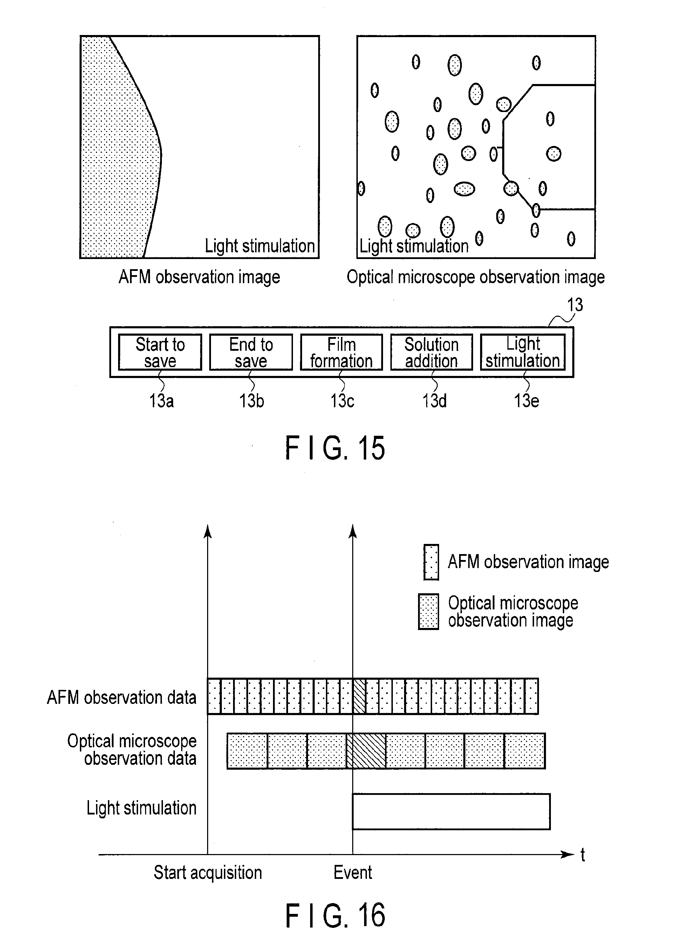

The configuration of the control device 13C is substantially similar to that of the control device 13 according to the first embodiment. However, as shown in FIG. 15, words "light stimulation" are allocated to the switch 13e. The switch 13e is a switch to actuate the optical illumination device 15.

### [Provision of Light Stimulation Information]

During the saving of the optical microscope observation data and the AFM observation data, in response to an "on" operation of the light stimulation switch 13e, the control device 13C gives a light stimulation command to the optical illumination device 15, and also gives a command to provide light stimulation event information to the computer 24 for optical microscope and the computer 34 for AFM. On receipt of the commands, the optical illumination device 15 applies light to the sample S to give light stimulation, the computer 24 for optical microscope provides light stimulation event information to the optical microscope observation image that is being saved in the storage memory 26 for optical microscope at the same time, and the computer 34 for AFM provides light stimulation event information to the AFM observation image that is being saved in the storage memory 36 for AFM at the same time.

The light stimulation can be given in various ways; for example, the light stimulation is stopped after given for a certain period of time or is periodically provided.

Accordingly, as shown in FIG. 16, the light stimulation event information is provided to the middle optical microscope observation image of the optical microscope observation data and to the middle optical microscope observation image of the SPM observation data. In FIG. 16, the optical microscope observation image and the AFM observation image that are shaded represent the optical microscope observation image and the AFM observation image to which the light stimulation event information has been provided, respectively.

As shown in FIG. 15, the solution addition event information may be provided by adding the words "light stimulation" to the optical microscope observation image and the AFM observation image at the time of light stimulation or by adding information to the measurement parameters. The light stimulation event information may also be provided by adding the words "light stimulation" to all the optical microscope observation images and all the AFM observation images all the while the light stimulation is being given.

Moreover, the compound microscope 10C may record the presence of the light stimulation together with characteristics of the applied light such as the wavelength and amount of the applied light in relation to the optical microscope observation data and the AFM observation data. FIG. 16 shows the presence of the light stimulation together with the optical microscope observation data and the AFM observation data.

Here, the saving of the optical microscope observation data and the AFM observation data may be started and ended by the "on" operations of the start-to-save switch 13a and the end-to-save switch 13b, respectively.

### [Reproduction of Optical Microscope Observation Data and AFM Observation Data]

In each of the embodiments described above, in the saved optical microscope observation data and AFM observation data, the information indicating the start-to-save images, the information indicating the end-to-save images, and the event information are provided to the observation images at the time of saving the respective ones, for example, as character information or as information that is one of the measurement parameters.

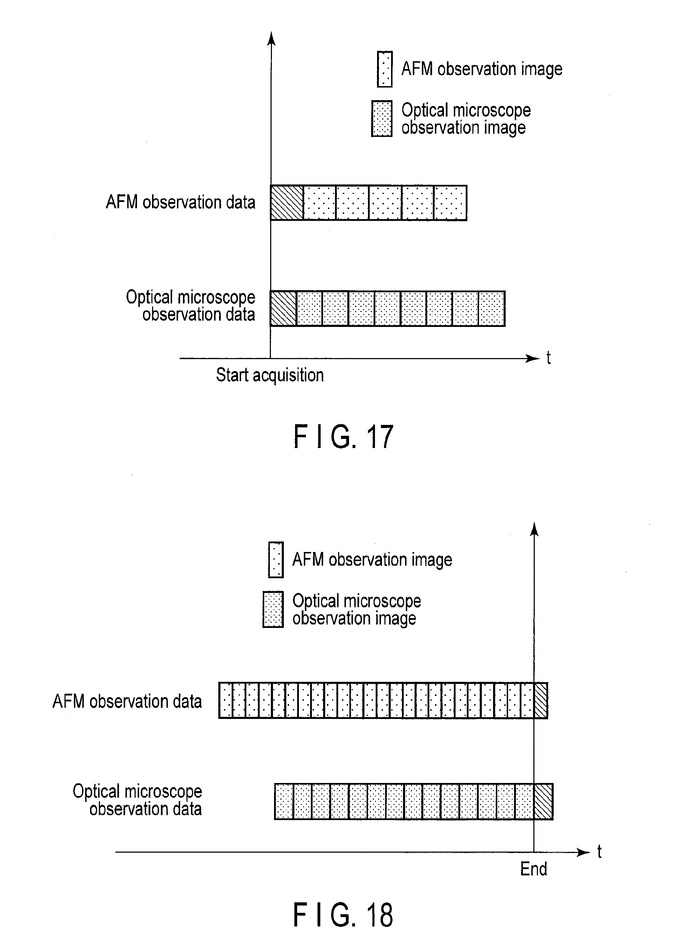

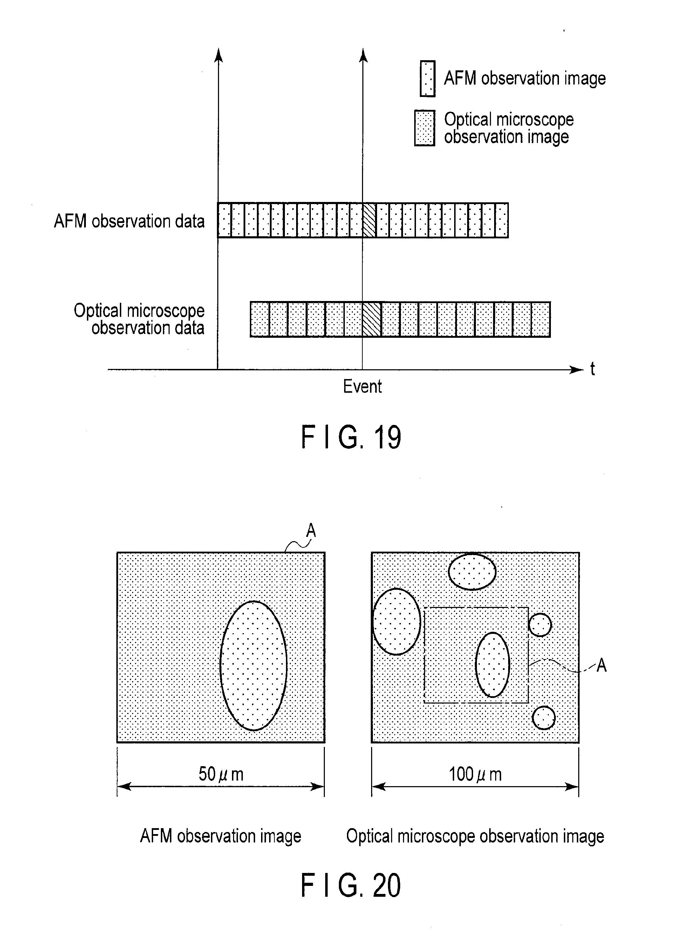

Thus, the optical microscope observation data and the AFM observation data can be reproduced in accordance with the following reproduction method so that simultaneity during observation is preserved.
(a) When the optical microscope observation data and the AFM observation data that have simultaneously started to be saved are reproduced, the optical microscope 11, 11A and the scanning probe microscope 12, 12A reproduce the optical microscope observation data and the AFM observation data with the reproduction timings of the optical microscope observation image and the AFM observation image, to which start-to-save information are provided, being synchronized, as shown in FIG. 17. In other words, the optical microscope 11 and the scanning probe microscope 12 are controlled under a reproduction command from the control device 13, 13B, 13C.
(b) When the optical microscope observation data and the AFM observation data that have been simultaneously saved are reproduced, the optical microscope 11, 11A and the scanning probe microscope 12, 12A reproduce the optical microscope observation data and the AFM observation data with the reproduction timings of the optical microscope observation image and the AFM observation image, to which end-to-save information has been provided, being synchronized, as shown in FIG. 18. In other words, the optical microscope 11 and the scanning probe microscope 12 are controlled under a reproduction command from the control device 13, 13B, 13C.
(c) When the optical microscope observation data and the AFM observation data in which the event information has been simultaneously saved are reproduced, the optical microscope 11, 11A and the scanning probe microscope 12, 12A reproduce the optical microscope observation data and the AFM observation data with the reproduction timings of the optical microscope observation image and the AFM observation image, to which the event information has been provided, being synchronized, as shown in FIG. 19. In other words, the optical microscope 11 and the scanning probe microscope 12 are controlled under a reproduction command from the control device 13, 13B, 13C.

The saved optical microscope observation data and AFM observation data comprise a series of time-series successive optical microscope observation images and a series of time-series successive SPM observation images, respectively. In each of the optical microscope observation images and the SPM observation images, there are no unnecessary time intervals between the observation images acquired in a time-series manner. Therefore, in each of the optical microscope observation data and the AFM observation data, a phenomenon and others to be observed are recorded without missed (within the performance ranges of the optical microscope 11, 11A and the scanning probe microscope 12, 12A).

As a result, it is possible to reproduce the optical microscope observation data and the AFM observation data that have been recorded without missing a phenomenon and others while preserving simultaneity. Consequently, the dynamic changes of the sample S in the optical microscope observation data and the AFM observation data are easily compared.

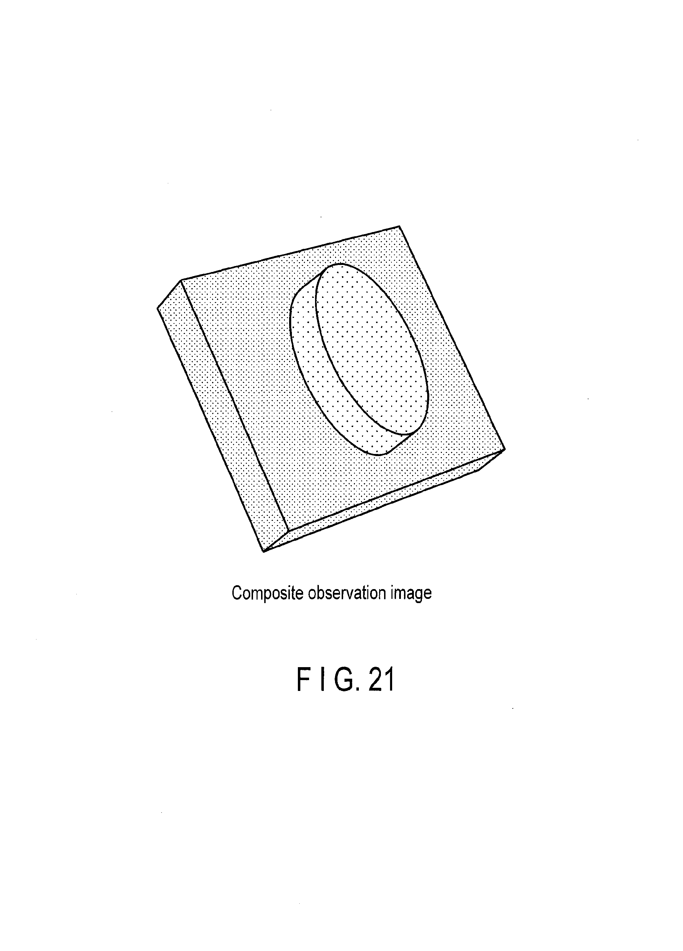

During reproduction, as shown in FIG. 20, an index A of an observation region of each AFM observation image in the AFM observation data may be displayed over each optical microscope observation image of the optical microscope observation data for ease of comparison. The use of such display allows the change of the observation region to be easily recognized by also moving the index A of the observation region on the optical microscope observation data in accordance with the amount in which the observation region of the AFM observation image is moved by unshown sample position moving means. In addition, a composite observation image in which the optical microscope observation image and the AFM observation image are composed as shown in FIG. 21 may be displayed. The composite image can be displayed by superimposing a color based on the optical microscope observation data on a color of the AFM bumpy three-dimensional image display, so that places emitting fluorescence can be contrasted with the AFM observation region.

### [Example of Observation using Compound Microscope]

One example of observation using the compound microscope according to the embodiments described above is given; the optical microscope comprises a fluorescence microscope, and how a fluorescent material is developed on a substrate is observed by the fluorescence microscope and the scanning probe microscope.

The fluorescence microscope observes how fluorescence-stained liposome is developed on the sample substrate as a lipid bilayer membrane, and the scanning probe microscope observes how the lipid bilayer membrane having a thickness of approximately 5 nm is developed and expands on the substrate.

The scanning probe microscope allows observing the submicron growth of the lipid bilayer membrane that is invisible when the fracture and development of the liposome observed by the fluorescence microscope are only viewed.

At the same time, it is possible to see the time at which the liposome is developed and the rate at which the liposome is making submicron growth by simultaneously starting measurements (the saving of observation data) using the fluorescence microscope and the scanning probe microscope in accordance with the timing of supplying a lipid membrane.

Reproducing the respective observation data at a time facilitates comparison.

While the embodiments of the present invention have been described so far with reference to the drawings, the present invention is not limited to these embodiments, and various modifications and changes may be made without departing from the spirit of the invention. The modifications and changes referred to here also include suitable combinations of the embodiments described above.

### Reference Signs List

10, 10A, 10B, 10C ··· compound microscope, 11, 11A ··· optical microscope, 12, 12A ··· scanning probe microscope, 13, 13B, 13C ··· control device, 13a, 13b, 13c, 13d, 13e ··· switches, 14 ··· solution adder, 15 ··· optical illumination device, 16 ··· storage medium, 21 ··· observation optical system, 22 ··· camera, 23 ··· camera controller, 24 ··· optical microscope computer, 25 ··· optical microscope frame memory, 26 ··· optical microscope storage memory, 27 ··· optical microscope monitor, 31 ··· AFM unit, 33 ··· AFM controller, 34 ··· AFM computer, 35 ··· AFM frame memory, 36 ··· AFM storage memory, 37 ··· AFM monitor, 41 ··· AFM/optical microscope common computer, 42 ··· optical microscope frame memory, 43 ··· optical microscope storage memory, 44 ··· AFM frame memory, 45 ··· AFM storage memory, 47 ··· AFM/optical microscope common monitor, 50 ··· control device, 51 ··· command output unit, 52 ··· switch, 53 ··· input switch, 53a, 53b, 53c, 53d, 53e ··· switches, 54 ··· pointing device.

## Claims

1. A compound microscope comprising:
an optical microscope to acquire dynamic observation data comprising a series of time-series successive optical observation images of an observation target;
a scanning probe microscope to acquire dynamic observation data comprising a series of time-series successive probe-derived observation images of the observation target; and
a control device to simultaneously give a common control command to the optical microscope and the scanning probe microscope.

2. The compound microscope according to claim 1, wherein the common control command is a start-to-save command that cases the optical microscope and the scanning probe microscope to start to save the respective observation data, and the control device comprises a start-to-save switch to simultaneously give the start-to-save command to the optical microscope and the scanning probe microscope.

3. The compound microscope according to claim 1 or 2, wherein the common control command is an end-to-save command that cases the optical microscope and the scanning probe microscope to end to save the respective observation data, and the control device comprises an end-to-save switch to simultaneously give the end-to-save command to the optical microscope and the scanning probe microscope.

4. The compound microscope according to any one of claims 1 to 3, wherein the common control command is an event information providing command that cases the optical microscope and the scanning probe microscope to provide event information to the respective observation data, and the control device comprises an event information providing switch to simultaneously give the event information providing command to the optical microscope and the scanning probe microscope.

5. The compound microscope according to any one of claims 1 to 4, wherein the optical microscope and the scanning probe microscope are configured to add measurement parameters in relation to the respective observation data.

6. The compound microscope according to any one of claims 1 to 5, wherein the optical microscope and the scanning probe microscope are configured to merge the observation data respectively displayed thereby to save it as a compound observation data.

7. The compound microscope according to claim 6, wherein the control device comprises an event information providing switch to command the optical microscope and the scanning probe microscope to provide event information to the compound observation data.

8. The compound microscope according to claim 6 or 7, wherein the optical microscope and the scanning probe microscope are configured to add measurement parameters in relation to the compound observation data.

9. The compound microscope according to any one of claims 6 to 8, wherein the scanning probe microscope and the optical microscope comprise a common monitor to display the respective observation data side by side.

10. The compound microscope according to claim 9, wherein the control device comprises a switch comprising a graphic interface, and part of the graphic interface is displayed on the common monitor.

11. The compound microscope according to any one of claims 1 to 10, further comprising an action mechanism to give an action to the observation target,
wherein the control device comprises a switch to actuate the action mechanism.

12. The compound microscope according to claim 2, wherein the optical microscope and the scanning probe microscope reproduce the respective observation data with the reproduction timings of the respective observation images synchronized at the start of saving.

13. The compound microscope according to claim 3, wherein the optical microscope and the scanning probe microscope reproduce the respective observation data with the reproduction timings of the respective observation images synchronized at the end of saving.

14. The compound microscope according to claim 4, wherein the optical microscope and the scanning probe microscope reproduce the respective observation data with the reproduction timings of the respective observation images synchronized at the time of the event information provision.

15. A control device of a compound microscope with an optical microscope and a scanning probe microscope combined, the optical microscope being to acquire dynamic observation data comprising a series of time-series successive optical observation images of an observation target, the scanning probe microscope being to acquire dynamic observation data comprising a series of time-series successive probe-derived observation images of the observation target, the control device being configured to simultaneously give a common control command to the optical microscope and the scanning probe microscope.

16. The control device according to claim 15, wherein the common control command is a start-to-save command that cases the optical microscope and the scanning probe microscope to start to save the respective observation data, the control device comprising a start-to-save switch to simultaneously give the start-to-save command to the optical microscope and the scanning probe microscope.

17. The control device according to claim 15 or 16,
wherein the common control command is an end-to-save command that cases the optical microscope and the scanning probe microscope to end to save the respective observation data, the control device comprising an end-to-save switch to simultaneously give the end-to-save command to the optical microscope and the scanning probe microscope.

18. The control device according to any one of claims 15 to 17, wherein the common control command is an event information providing command that cases the optical microscope and the scanning probe microscope to provide event information to the respective observation data, the control device comprising an event information providing switch to simultaneously give the event information providing command to the optical microscope and the scanning probe microscope.

19. A control method of a compound microscope with an optical microscope and a scanning probe microscope combined, the optical microscope being to acquire dynamic observation data comprising a series of time-series successive optical observation images of an observation target, the scanning probe microscope being to acquire dynamic observation data comprising a series of time-series successive probe-derived observation images of the observation target, the control method comprising simultaneously giving a common control command to the optical microscope and the scanning probe microscope.

20. The control method according to claim 19, wherein the common control command is a start-to-save command that cases the optical microscope and the scanning probe microscope to start to save the respective observation data.

21. The control method according to claim 19 or 20,
wherein the common control command is an end-to-save command that cases the optical microscope and the scanning probe microscope to end to save the respective observation data.

22. The control method according to any one of claims 19 to 21, wherein the common control command is an event information providing command that cases the optical microscope and the scanning probe microscope to provide event information to the respective observation data.

23. A control program of a compound microscope with an optical microscope and a scanning probe microscope combined, the optical microscope being to acquire dynamic observation data comprising a series of time-series successive optical observation images of an observation target, the scanning probe microscope being to acquire dynamic observation data comprising a series of time-series successive probe-derived observation images of the observation target, the control program allowing a computer to perform a command function to simultaneously give a common control command to the optical microscope and the scanning probe microscope.

24. A storage medium in which the control program according to claim 23 is stored.
